**Europäisches Patentamt**

**European Patent Office**

**Office européen des brevets**

(19)

(11) Veröffentlichungsnummer : **0 413 852 B1**

(12)

# EUROPÄISCHE PATENTSCHRIFT

(45) Veröffentlichungstag der Patentschrift :
**09.09.92 Patentblatt 92/37**

(51) Int. Cl.$^5$ : **B62D 55/12,** B60K 17/348,
B60K 17/356

(21) Anmeldenummer : **89119101.7**

(22) Anmeldetag : **14.10.89**

(54) **Raupenfahrzeug mit Haupt- und Zusatztreibrädern.**

(30) Priorität : **07.07.89 US 376732**

(43) Veröffentlichungstag der Anmeldung :
**27.02.91 Patentblatt 91/09**

(45) Bekanntmachung des Hinweises auf die
Patenterteilung :
**09.09.92 Patentblatt 92/37**

(84) Benannte Vertragsstaaten :
**DE FR GB IT**

(56) Entgegenhaltungen :
**DE-A- 2 835 865
DE-C- 526 872
DE-C- 3 633 424
GB-A- 2 022 786**

(56) Entgegenhaltungen :
**US-A- 4 546 844
PATENT ABSTRACTS OF JAPAN Band 12, Nr.
484 (M-776)(3331), 16. Dezember 1988; & JP-
A-63203429 (AISIN A.W.) 23.08.1988**

(73) Patentinhaber : **DEERE & COMPANY
1 John Deere Road
Moline, Illinois 61265 (US)**

(72) Erfinder : **Moriarty, Kevin Joseph
42 Hillcrest Avenue
Davenport Iowa 52803 (US)**

(74) Vertreter : **Feldmann, Bernhard et al
DEERE & COMPANY European Office, Patent
Department Steubenstrasse 36-42 Postfach
503
W-6800 Mannheim 1 (DE)**

EP 0 413 852 B1

## Beschreibung

Die Erfindung betrifft ein Raupenfahrzeug mit Antrieb und Hauptgetriebe, welche wenigstens eine als Endlosriemen ausgebildete Gleisbahn mit Hilfe wenigstens eines mit der Gleisbahn in reibendem Eingriff stehenden Haupttreibrades bei einer ersten Geschwindigkeit antreiben, und wenigstens einem Zusatztreibrad, welches ebenfalls antreibbar ist und mit der Gleisbahn in reibendem Eingriff steht.

Konventionelle Raupenfahrzeuge sind gewöhnlich mit Gleisbahnen aus Stahlsegmenten ausgestattet, bei denen Stahlkettenglieder zu einer Stahlgleiskette zusammengefügt sind. Die Gleiskette wird durch eine Zahntrommel formschlüssig angetrieben, wobei die Zahntrommel über ein Getriebe mit einem Verbrennungsmotor gekoppelt ist.

Bereits vor geraumer Zeit wurde vorgeschlagen, endlose Riemengleisbahnen aus elastomerischem Material zu bilden. Derartige Gleisbahnen haben einige Vorteile. Ein solcher Vorteil liegt darin, daß die Riemengleisbahnen es einem Raupenfahrzeug erlauben, über Straßen und Bordsteine zu fahren, ohne diese aufzureißen oder zu beschädigen, wie dies durch die Stahlstollen konventioneller Raupenfahrzeuge geschehen kann. Es sind zwei Systeme für Riemengleisbahnen bekannt geworden, die bei Baumaschinen bzw. landwirtschaftlichen Maschinen Anwendung finden. So beschreibt die US-A- 4,678,244 eine Gleisbahn, welche eine Reihe von Spalten aufweist, in die eine gezahnte Betriebstrommel eingreift, um die Gleisbahn formschlüssig anzutreiben. Jede der Spalten ist durch Stahleinsätze in den Gleisbahnen verstärkt. Ein weiteres System für Riemengleisbahnen eines landwirtschaftlichen Schleppers geht aus der PCT-Anmeldung WO-A-85/02 824 hervor. Bei diesem Gleisbahnsystem steht die Riemengleisbahn mit einem gummiüberzogenen Hauptantriebsrad in Verbindung, das am hinteren Ende des Raupenfahrzeuges angeordnet ist. Ferner ist am vorderen Ende des Schleppers eine pneumatische Reifenspannrolle angeordnet. Bei einem Antriebsriemensystem kann ein Schlupf zwischen dem Hauptantriebsrad und der Riemengleisbahn auftreten. Daher wird die Riemengleisbahn großen Zugspannungskräften ausgesetzt, um das Durchrutschen zu vermindern.

Mittels Reibung angetriebene Riemengleisbahnen, wie sie soeben beschrieben wurden, liefern für Vorwärts- und Rückwärtsfahrt nicht die gleiche Leistungsfähigkeit. Bei Vorwärtsfahrt der durch ein hinteres Haupttreibrad angetriebenen Riemengleisbahn tritt die kleinste Spannung im Riemen am oberen Teil der Riemengleisbahn auf, während die maximale Spannung sich im unteren Bereich des Riemens einstellt, wo der Kontakt mit den Treibrädern besteht. In umgekehrter Richtung, also bei Rückwärtsfahrt, ist das Gegenteil der Fall. Hier tritt die maximale Spannung im oberen Bereich des Riemens auf, wohingegen die minimale Spannung sich an der unteren Kontaktstelle mit dem Treibrad einstellt. Aus diesem Grund hat der Schlepper einen größeren Vorwärtsschub als Rückwärtsschub.

Das maximale Schubpotential des Gleisbahnsystems ist proportional zur statischen Vorspannung der Gleisbahn. Aus diesem Grund ist es insbesondere bei großen, schweren Fahrzeugen erforderlich, hohe Zugspannungen an die Gleisbahnen anzulegen, um genügend große Rückwärtsschübe anlegen zu können. Hohe Vorspannungen der Gleisbahnen erfordern jedoch verstärkte Rahmenkonstruktionen für das die Gleisbahn aufnehmende Fahrgestell, um die hohen Zugbelastungen aufnehmen zu können.

Ein Verfahren, durch das sich die Leistungscharakteristik sowohl für Vorwärts- als auch für Rückwärtsfahrt annähern läßt, ergibt sich daraus, daß alle vier Räder der Gleisbahn angetrieben werden. So offenbart die gattungsbildende US-A-4560018 einen Tandemantriebsmechanismus, durch den ein nahtloser, elastomerischer Riemen angetrieben wird. Der vorgeschlagene Mechanismus liefert ein größeres Drehmoment zu den Hinterrädern als zu den Vorderrädern.

Die Aufgabe der Erfindung wird darin gesehen, ein Raupenfahrzeug der eingangs genannten Art anzugeben, dessen Schubleistungsfähigkeit bei Vorwärts- und Rückwärtsfahrt etwa gleich große Werte einnimmt, und bei dem Unterschiede der Riemenspannungskräfte weitgehend ausgeglichen werden.

Die Aufgabe wird erfindungsgemäß dadurch gelöst, daß das Zusatztreibrad mit einer von der Haupttreibradgeschwindigkeit abweichenden zweiten Geschwindigkeit von einem Zusatzgetriebe antreibbar ist, welches einen Getriebeeingang, der mit dem Hauptgetriebe in Verbindung steht, und einen Getriebeausgang, welcher mit dem Zusatztreibrad in Verbindung steht, aufweist.

Die zweite Geschwindigkeit weicht vorzugsweise etwa um 2 % von der ersten Geschwindigkeit ab. Bei Vorwärtsfahrt können die vorderen Zusatztreibräder um 2 % langsamer und bei Rückwärtsfahrt um 2 % schneller angetrieben werden. Tritt bei Vorwärtsfahrt Schlupf zwischen den Haupttreibrädern und der Gleisbahn auf, so kommen die Zusatztreibräder zum Einsatz und übernehmen wenigstens teilweise den Antrieb der Gleisbahn. Bei Rückwärtsfahrt übernehmen die Zusatztreibräder zunächst den Antrieb. Hier wirken die Haupttreibräder bei Schlupf zwischen Zusatzrädern und Gleisbahn unterstützend mit.

Gemäß einer ersten bevorzugten Ausgestaltung der Erfindung stehen alle Zusatztreibräder über ein gemeinsames Zusatzgetriebe mit dem Hauptgetriebe in Verbindung. Dabei ist vorzugsweise ein Zusatzlenksystem zwischen dem Zusatzgetriebe und den zwei Zusatztreibrädern angeordnet.

EP 0 413 852 B1

Alternativ hierzu kann gemäß einer zweiten bevorzugten Ausgestaltung der Erfindung auch jedem Zusatztreibrad ein Zwischengetriebe in Form einer Endantriebseinheit vorgeschaltet sein. Hierbei ist es vorteilhaft, wenn die jeweilige Endantriebseinheit einem Lenksystem der Haupttreibräder nachgeschaltet ist und über dieses mit dem Hauptgetriebe in Verbindung steht.

Einer dritten bevorzugten Ausgestaltung der Erfindung zufolge ist das Zusatztreibrad mit einer von der Haupttreibradgeschwindigkeit abweichenden zweiten Geschwindigkeit von einem Elektromotor antreibbar. Hierbei ist es vorteilhaft, wenn jedes Zusatztreibrad durch einen gesonderten Elektromotor antreibbar ist.

Vorzugsweise ist zwischen Hauptgetriebe und zwei Haupttreibrädern ein Lenksystem zwischengeschaltet.

Einer besonders bevorzugten Ausgestaltung der Erfindung zufolge ist dem wenigstens einen Zusatztreibrad und/oder dem wenigstens einen Haupttreibrad eine Zusatzfreilaufkupplung vorgeschaltet.

Die Hauptfreilaufkupplung ist vorzugsweise so angeordnet und ausgebildet, daß sie sperrt, wenn die Gleisbahn in eine erste Richtung angetrieben wird, und ein Überholen erlaubt, wenn die Gleisbahn in eine zweite entgegengesetzte Richtung angetrieben wird. Die Zusatzfreilaufkupplung ist vorzugsweise so angeordnet und ausgebildet, daß sie sperrt, wenn die Gleisbahn in die zweite Richtung angetrieben wird, und ein Überholen erlaubt, wenn die Gleisbahn in die erste Richtung angetrieben wird.

Einer bevorzugten Weiterbildung der Erfindung zufolge ist ein Richtungssensor zur Erfassung der Fahrtrichtung des Raupenfahrzeuges vorgesehen, der in Abhängigkeit der erfaßten Fahrzeugrichtung Steuersignale an Freilaufkupplungen und/oder Elektromotoren abgibt.

Besonders vorteilhaft ist es, wenn das Zusatzgetriebe bzw. die Endantriebseinheit zwei Getriebestufen aufweist. Dies ermöglicht ein Umschalten der zweiten Geschwindigkeit, mit der die Zusatztreibräder angetrieben werden zwischen Vorwärtsfahrt (Erniedrigung) und Rückwärtsfahrt (Erhöhung).

Vorzugsweise ist ein Richtungssensor zur Erfassung der Fahrtrichtung des Raupenfahrzeuges vorgesehen, der in Abhängigkeit der erfaßten Fahrgeschwindigkeit Steuersignale zur Umschaltung des Zusatzgetriebes oder der Endantriebseinheit abgibt.

Um die Geschwindigkeit der Zusatztreibräder in Abhängigkeit der Geschwindigkeit der Haupttreibräder antreiben zu können, ist es zweckmäßig, daß ein Sensor zur Erfassung der ersten Drehzahl des Haupttreibrades vorgesehen ist, der durch elektrische Signale den Elektromotor so ansteuert, daß dieser das wenigstens eine Zusatztreibrad bei einer zweiten Drehzahl antreibt.

Einem weiteren Merkmal der Erfindung zufolge ist ein Sensor zur Erfassung der Gleisbahngeschwindigkeit vorgesehen, dessen Signale einem Steuerapparat zugeführt werden. Der Steuerapparat vergleicht die Drehgeschwindigkeit des Haupttreibrades mit der Gleisbahngeschwindigkeit und steuert bei Schlupf zwischen dem Haupttreibrad und der Gleisbahn wenigstens einen Elektromotor an, um wenigstens ein Zusatztreibrad anzutreiben.

Anhand der Zeichnung, in der mehrere Ausführungsbeispiele der Erfindung gezeigt sind, sollen die Erfindung sowie weitere vorteilhafte Ausgestaltungen und Weiterbildungen der Erfindung beschrieben und näher erläutert werden.

Es zeigt:

Fig. 1 die Seitenansicht eines Raupenfahrzeuges mit Gleisbahnen, wobei die fugenlosen Riemen aus elastomerischem Material bestehen,

Fig. 2 ein Schaltschema einer ersten Ausgestaltung der Erfindung,

Fig. 3 a, 3 b, 3 c, 3 d, Illustrationen des Betriebes eines Raupenfahrzeuges,

Fig. 4 ein Schaltschema einer zweiten Ausgestaltung der Erfindung und

Fig. 5 ein Schaltschema einer dritten Ausgestaltung der Erfindung.

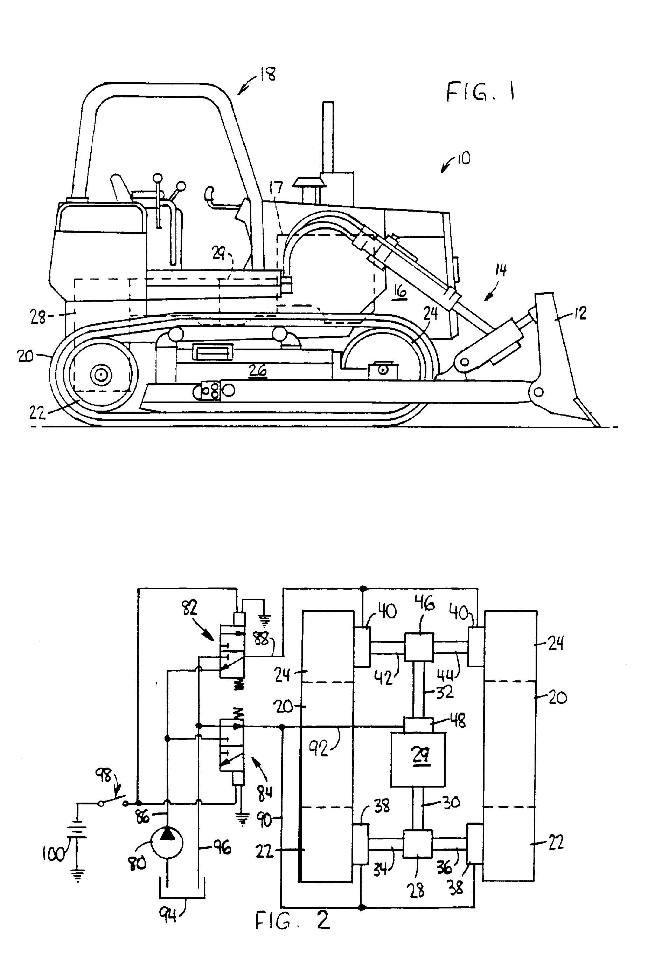

Die Fig. 1 stellt ein Raupenfahrzeug 10 dar, an welchem durch Gestänge 14 eine Planierraupenschaufel 12 befestigt ist. Das Fahrzeug 10 ist mit einem Rahmen 16 ausgestattet, welcher einen Verbrennungsmotor 17, angedeutet durch Phantomlinien, aufnimmt, und einen Bedienungsstand 18 abgrenzt. Das Fahrzeug 10 wird durch beidseits angeordnete Riemenlaufbahnen 20, auch Gleisbahn genannt, aus gummiartigem Material angetrieben. Jede Riemenlaufbahn 20 steht reibend mit einem hinteren Haupttreibrad 22 und einem vorderen Zusatztreibrad 24 in Eingriff. Haupttreibrad 22 und Zusatztreibrad 24 fluchten in Längsrichtung des Fahrzeuges 10 miteinander. Die Riemenlaufbahn 20 wird durch eine Spann- und Entspannanordnung 26 gespannt. Die Riemenlaufbahn 20 weist Zentriermittel auf, die den Riemen 20 auf den Treibrädern 22, 24 führen. Ferner weist der Riemen nicht dargestellte Stollen auf, die in reibendem Eingriff mit dem Untergrund stehen.

Die Haupttreibräder 22 stehen mit einem Lenksystem 28 (dargestellt durch Phantomlinien) in Verbindung, welches mit dem Hauptgetriebe 29 gekoppelt ist. Letzteres ist an die Ausgangswelle des Motors 17 angeflanscht. Bei dem Lenksystem 28 kann es sich um ein solches üblicher Bauart handeln, wie z. B. ein Kupplungs-Brems-System, eine Hydrostatik-oder Differentiallenkung. Bei dem Getriebe 29 kann es sich um ein Power-Shift-Getriebe handeln, welches mehrere Kupplungen und Bremsen umfaßt, die entsprechend der Einstellung eines in der Kabine 18 angeordneten Gangschalthebels betätigbar sind.

3

**Erste Ausgestaltung:**

Figur 2 stellt eine erste Ausgestaltung des erfindungsgemäßen Antriebssystems dar. Hierbei enthält das Getriebe 29 einen ersten Ausgang mit einer Hauptantriebswelle 30 und einen zweiten Ausgang mit einer Zusatzantriebswelle 32. Die Hauptantriebswelle 30 seht mit dem Hauptlenksystem 28 in Verbindung. Letzteres verteilt die Ausgangskraft des Getriebes 29 auf eine linke und eine rechte Antriebswelle 34 und 36. Die Antriebswellen 34 und 36 stehen mit einer rechten und einer linken Hauptfreilaufkupplung 38 in Verbindung. Die Hauptfreilaufkupplungen 38 treiben die Haupttreibräder 22 an.

Die zusätzlichen Treibräder 24 sind mit zusätzlichen Freilaufkupplungen 40 versehen, die an linke und rechte Antriebswellen 42 und 44 angeschlossen sind. Wie beim Hauptantriebssystem stehen auch hier die Antriebswellen 42 und 44 mit einem zusätzlichen Lenksystem 46 in Verbindung, durch welches die Kraftaufteilung zu den zusätzlichen Treibrädern 24 gesteuert wird. Das zusätzliche Lenksystem 46 wird von der Zusatzantriebswelle 32 angetrieben. Die Zusatzantriebswelle 32 steht mit dem Getriebe 29 über ein Zweiganggetriebe 48 in Verbindung. Das Zweiganggetriebe 48 ist derart umschaltbar, daß es die zusätzlichen Treibräder 24 entweder bei 98 % der Geschwindigkeit der Haupttreibräder 22 in Vorwärtsrichtung oder bei 102 % der Geschwindigkeit der Haupttreibräder 22 in Rückwärtsrichtung antreibt.

Die vier Freilaufkupplungen 38 ,40 können beispielsweise denen entsprechen, die in der US-A- 4,546,844 beschrieben sind. Auf diese US-PS wird hiermit bezüglich der Offenbarung Bezug genommen. Durch diese Freilaufkupplungen 38 können sich die Treibräder 22, 24 schneller drehen, als es der Antriebsdrehzahl entspricht, ähnlich wie es bei dem Rad eines Fahrrades ist. Dreht sich jedoch das jeweilige Treibrad 22, 24 nicht schneller als der Antrieb, so wird es durch den Antrieb angetrieben. Diese Freilaufskupplungsart enthält eine Einweg- oder Überholkupplung, wenn die Räder in eine Richtung angetrieben werden, und eine hydraulisch betätigbare Reibungskupplung, wenn die Räder in die entgegengesetzte Richtung angetrieben werden. Hierdurch wirkt die Kupplung in der ersten Richtung als Überholkupplung und verbindet in der entgegengesetzten Richtung das Treibrad mit der Antriebskraft.

Die beiden zusätzlichen Freilaufkupplungen 40 überholen nur im Uhrzeigersinn beziehungsweise in Vorwärtsrichtung. Sie werden durch die hydraulisch betätigbare Reibungskupplung festgesetzt, wenn sie entgegen der Uhrzeigerrichtung oder in Rückwärtsrichtung angetrieben werden. Die beiden Hauptfreilaufkupplungen 38 überholen nur in der dem Uhrzeigersinn entgegengesetzten oder in Rückwärtsrichtung. Sie werden durch die Reibungskupplung gesperrt, wenn das Raupenfahrzeug in Vorwärtsrichtung angetrieben wird.

Das Ansprechen der hydraulisch betätigten Reibungskupplungen kann durch hydraulische Ventile gesteuert werden, welche Hydraulikdruck zu den Reibungskupplungen in Abhängigkeit eines Richtungsschalters 98 für das Getriebe 29 leiten. Wie in Figur 2 dargestellt, richtet eine Hydraulikdruckquelle, beispielsweise eine Pumpe 80, durch die Hydraulikversorgungsleitungen 86 Hydraulikflüssigkeit zu den federvorgespannten Zwei-Positionen-Magnetventilen 82 und 84. Das Ventil 82 steht mit der zusätzlichen Freilaufkupplung 40 über die Versorgungs- und Rücklaufleitung 88 in Verbindung. Das Ventil 84 steht mit der Hauptfreilaufkupplung 38 und dem Zwei-Gang-Getriebe 48 über die Versorgungs- und Rücklaufleitungen 90 beziehungsweise 92 in Verbindung.

Figur 2 stellt die Schaltposition dar, in der das Raupenfahrzeug in Vorwärtsrichtung fährt. Hierbei wird Hydraulikdruck durch das Ventil 84 an die Hauptfreilaufkupplungen 38 angelegt, um die Reibungskupplungen in Eingriff zu bringen. Außerdem stehen die zusätzlichen Freilaufkupplungen 40 über das Ventil 82 und die Rücklaufleitung 96 mit dem Sammelbehälter 94 in Verbindung. Die Ventile 82 und 84 wirken gegensinnig, so daß dann, wenn beide stromlos sind, wie es in Figur 2 dargestellt wurde, das Ventil 82 die zusätzlichen Freilaufkupplungen 40 mit dem Sammelbehälter 94 verbindet und das Ventil 84 die Hauptfreilaufkupplungen 38 an die Pumpe 80 anschließt. Entsprechend verbindet bei erregten Ventilen 82, 84 das Ventil 82 die Pumpe 80 mit den zusätzlichen Freilaufkupplungen 40 und das Ventil 84 die Hauptfreilaufkupplungen 38 mit dem Sammelbehälter 94.

Die Ventile 82 und 84 werden wahlweise durch einen Richtungsgeberschalter 98 an eine elektrische Spannungsquelle 100 angelegt und erregt. Der Richtungsgeberschalter 98 kann sich am durch eine Bedienungsperson betätigbaren Richtungswahlhebel befinden, so daß bei einer Bewegung des Hebels von vorwärts auf rückwärts der Richtungsgeberschalter 98 geschlossen wird. Eine Bewegung des Hebels von rückwärts auf vorwärts hingegen öffnet den Richtungsgeberschalter 98.

Das Ventil 84 steht über die Hydraulikleitung 92 auch mit dem Zweiganggetriebe 48 in Verbindung. Hierdurch wird das Zweiganggetriebe 48 immer dann geschaltet, wenn der Richtungsgeberschalter 98 geschlossen oder geöffnet ist. Auf diese Weise läßt sich das Zweiganggetriebe 48 in Verbindung mit der Freilaufkupplung betätigen.

Es wird hervorgehoben, daß das Hauptlenksystem 28 und das zusätzliche Lenksystem 46 wirkungsmäßig zusammengeschaltet sind. Bei der Lenkung des Raupenfahrzeuges ist es erforderlich, daß die linken Antriebskräfte 34 und 42 sowie die rechten Antriebskräfte 36 und 44 paarweise zusammenwirken. Der Richtungsgeberschalter 98 und der zugehörige hydraulische Kreis, wie er in Figur 2 dargestellt ist, arbeiten befriedigend bei einem Raupenfahrzeug, welches eine Schiebekurve ausführt, wobei keine Gegendrehung der Gleisbahn erfolgt. Bei Raupenfahrzeugen hingegen, die die Möglichkeit haben, sich auf der Stelle zu drehen, werden die Gleisbahnen in gegensinnigen Richtungen angetrieben. Hierbei müssen die linken Freilaufkupplungen und die rechten Freilaufkupplungen jeweils an separate Hydraulikkreise angeschlossen werden, und es werden für jede der beiden Seiten je ein Richtungsgeberschalter erforderlich, durch die sichergestellt wird, daß die Freilaufkupplungen ordnungsgemäß angesteuert werden.

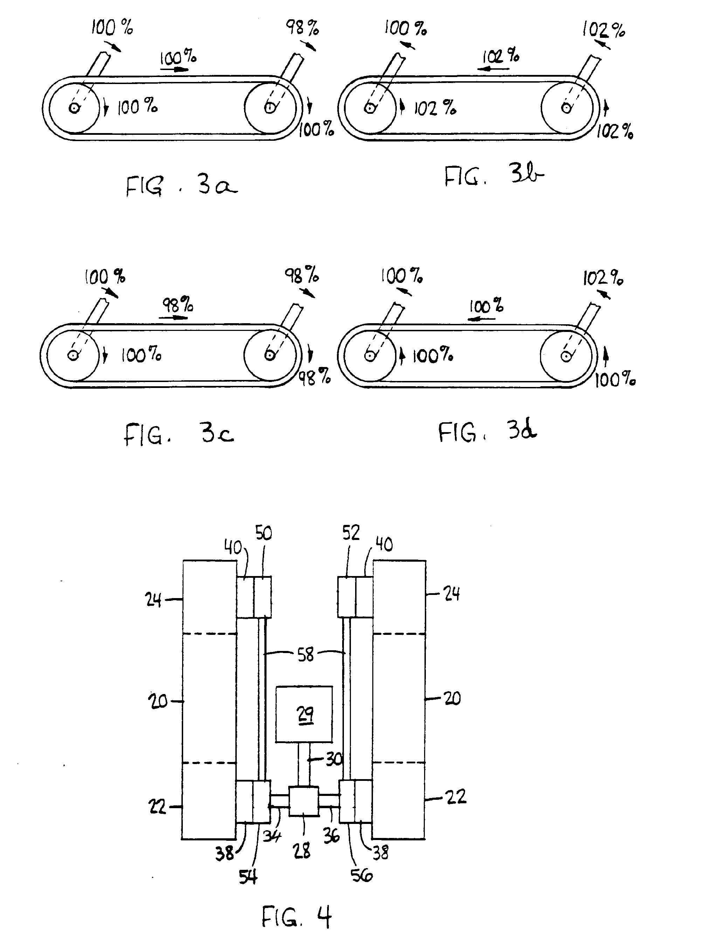

Anhand der Figuren 3 a und 3 c wird nachfolgend die Wirkungsweise der Antriebsanordnung des Raupenfahrzeuges beschrieben, wenn es in Vorwärtsrichtung fährt. Gemäß Figur 3 a besteht kein Schlupf zwischen der Riemenlaufbahn und dem das Raupenfahrzeug antreibenden Haupttreibrad. Der erste Ausgang des Getriebes wird mit einer ersten Geschwindigkeit angetrieben, welche mit 100 % bezeichnet wurde. Da die Hauptfreilaufkupplungen gesperrt sind, wird die erste Geschwindigkeit auf die Haupttreibräder übertragen, so daß sich diese mit 100 % drehen. Die Haupttreibräder treiben ihrerseits die Riemenlaufbahnen mit 100 % an. Durch das Zweiganggetriebe wird die zweite Ausgangsgeschwindigkeit des Getriebes vermindert, so daß der Antrieb die zusätzlichen Treibräder bei 98 % der Geschwindigkeit der Haupttreibräder antreibt. Daher liegt die Antriebsdrehzahl zu den zusätzlichen Freilaufkupplungen bei 98 %. Da die zusätzlichen Freilaufkupplungen nicht gesperrt sind, kann sich das zusätzliche Treibrad schneller drehen, als sein Antrieb. Aus diesem Grund drehen sich die zusätzlichen Treibräder mit der selben Geschwindigkeit wie die Haupttreibräder, da sie mit diesen über die Riemenlaufbahn kraftschlüssig verbunden sind, ohne jedoch die Riemenlaufbahn anzutreiben.

Bei Auftreten eines Schlupfes zwischen dem Haupttreibrad und der Riemenlaufbahn kann letztere bei 98 % der Geschwindigkeit des Haupttreibrades angetrieben werden. In diesem Fall wird die zusätzliche Antriebskraft auf die zusätzliche Freilaufkupplung und das zusätzliche Treibrad kraftschlüssig übertragen, wobei das zusätzliche Treibrad bei 98 % angetrieben wird und Leistung auf die Riemenlaufbahn überträgt. Vermindert sich der Schlupf und erhöht sich die Riemengeschwindigkeit, so wird das zusätzliche Treibrad durch die Riemenlaufbahn mit einer Geschwindigkeit von mehr als 98 % angetrieben, d. h. es läuft frei mit.

In den Figuren 3 b und 3 d ist die Wirkungsweise der Antriebsanordnung in umgekehrter Richtung, d. h. bei Rückwärtsfahrt, dargestellt. Gemäß Figur 3 b tritt kein Schlupf zwischen dem wirksamen zusätzlichen Treibrad und der Riemenlaufbahn auf. Bei Rückwärtsfahrt des Raupenfahrzeuges sind die zusätzlichen Freilaufkupplungen gesperrt und die Hauptfreilaufkupplungen gelöst. Außerdem ist das Zweiganggetriebe umgeschaltet und treibt die zusätzlichen Treibräder nicht bei 98 %, sondern bei 102 % der Geschwindigkeit der Haupttreibräder an. Bei dem schlupffreien Zustand werden die zusätzlichen Treibräder durch das Zweiganggetriebe mit 102 % angetrieben. Die zusätzlichen Treibräder treiben damit die Riemenlaufbahn bei 102 % an. Da die Hauptfreilaufkupplungen gelöst sind, laufen die Haupträder frei mit und werden durch die Riemenlaufbahn ebenfalls mit 102 % angetrieben.

Tritt ein Schlupf zwischen dem zusätzlichen Treibrad und der Riemenlaufbahn auf, so wird das Haupttreibrad bei 100 % der Haupteingangsdrehzahl kraftschlüssig angetrieben. Auch die Riemenlaufbahn wird infolgedessen so lange mit 100 % vom Haupttreibrad angetrieben, bis genügend Zugkraft von dem zusätzlichen Treibrad auf die Riemenlaufbahn übertragen wird, um die Laufbahn mit größeren Geschwindigkeiten als 100 % anzutreiben. In diesem Fall überholt das Haupttreibrad den Hauptantriebsausgang.

In den oben dargestellten Beispielen wurden 98 % und 102 % der Geschwindigkeit des Haupttreibrades angegeben. Es soll jedoch hervorgehoben werden, daß es sich hierbei lediglich um Beispiele handelt und auch andere Prozentwerte ausgewählt werden können.

**Zweite Ausgestaltung:**

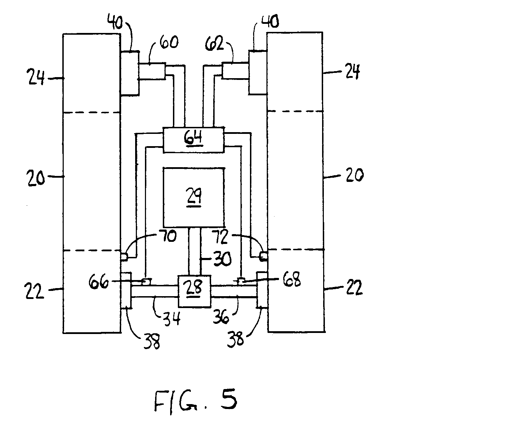

Eine zweite Ausgestaltung der Erfindung geht aus Figur 4 hervor und wirkt auf ähnliche Weise wie die erste Ausgestaltung. Das Zweiganggetriebe der ersten Ausgestaltung wurde durch linke und rechte zusätzliche Zweigang-Endantriebe 50, 52 ersetzt. Die Endantriebe 50 und 52 können ähnlich ausgebildet sein, wie die Zweigang-Endantriebe gemäß der US-A 4,240,534, auf die hiermit bezüglich deren Offenbarung Bezug genommen wird. Dieser Endantrieb weist eine Hochgeschwindigkeitsverbindung und eine Niedergeschwindigkeitsverbindung für den Antrieb eines Antriebskettenrades eines Raupenfahrzeuges auf. Die unterschiedlichen Geschwindigkeitskopplungen lassen sich durch hydraulisch betätigbare Kupplungen wahlweise einschalten.

Die Zusatzantriebswelle 32, das zusätzliche Lenksystem 46 und die linke und rechte Antriebswelle 42 und 44 gemäß der ersten Ausgestaltung wurden in der zweiten Ausgestaltung durch zwei rechtwinklige Getriebe 54 und 56 ersetzt, die zusätzliche Antriebswellen 58 antreiben. Die rechtwinkligen Getriebe 54, 56 haben je zwei Ausgänge: der erste Ausgang treibt die Haupttreibräder 22 über Freilaufkupplungen 38 an und der zweite Ausgang treibt die Endantriebseinheiten 50 und 52 über die zusätzlichen Antriebswellen 58 an. Die Endantriebe sind wirksam mit den zusätzlichen Treibrädern 24 gekoppelt. Das zusätzliche Lenksystem kann hier entfallen, da der mechanische Antriebseingang der Endantriebe kraftflußabwärts vom Hauptlenksystem 28 liegt.

Wie bei der ersten Ausgestaltung kann auch hier die hydraulische Druckversorgung zu den Endantrieben durch einen Richtungsgeberschalter 98 ausgelöst werden. Die Hydraulikflüssigkeit wird über die Versorgungs- und Rücklaufleitung 92 durch Einstellung des Ventiles 84 zu und von den Endantrieben 50 und 52 geleitet, wie dies bereits anhand der ersten Ausgestaltung beschrieben wurde.

**Dritte Ausgestaltung:**

Die dritte Ausgestaltung der Erfindung geht aus Figur 5 hervor. Bei dieser Ausgestaltung werden die zusätzlichen Treibräder durch einen linken und einen rechten Elektromotor 60 und 62 angetrieben. Die Elektromotoren 60, 62 sind über Freilaufkupplungen 40 mit den zusätzlichen Treibrädern 24 verbunden. Die Elektromotoren stehen mit einem nicht dargestellten Generator in Verbindung, welcher die elektrische Versorgungsleistung liefert. Der Generator wird durch die Verbrennungskraftmaschine 17 angetrieben.

Die Geschwindigkeit der Elektromotoren 60, 62 wird durch einen Steuerapparat 64 vorgegeben, welcher einen kleinen programmierbaren Rechner, beispielsweise einen Mikro-Computer, enthalten kann. Dem Steuerapparat 64 werden die Signale eines linken und eines rechten Radgeschwindigkeitssensors 66 und 68 zugeführt, welcher die Radgeschwindigkeiten der Haupttreibräder 22 erfaßt. Außerdem steht der Steuerapparat 64 mit dem Richtungsgeberschalter 98 in Verbindung, um die Fahrtrichtung des Raupenfahrzeuges zu erfassen. Wie anhand der Figur 2 beschrieben, werden über Versorgungs- und Rücklaufleitungen 88 und 90 die Freilaufkupplungen 40 beziehungsweise 38 mit Hydraulikflüssigkeit versorgt. In der Ausgestaltung gemäß Figur 5 kann jedoch die Versorgungs- und Rücklaufleitung 92 entfallen.

Meldet der Richtungsgeberschalter 98 dem Steuerapparat 64, daß das Raupenfahrzeug in Vorwärtsrichtung bewegt wird, so steuert der Steuerapparat 84 die Elektromotoren 60 und 62 an, so daß diese eine Abtriebsdrehzahl von 98 % der Drehzahl der Haupttreibräder abgeben. Die Freilaufkupplungen, die ein Überholen ermöglichen, erlauben es den zusätzlichen Treibrädern, sich bei der gleichen Geschwindigkeit wie die Haupttreibräder zu drehen, wie es in der Figur 3 a dargestellt wurde. Bei ausreichendem Schlupf beginnen die Elektromotoren die zusätzlichen Treibräder bei 98 % der Geschwindigkeit der Haupttreibräder anzutreiben, wodurch auch die Riemenlaufbahn angetrieben wird.

Ähnlich verhält es sich, wenn der Richtungsgeberschalter 98 an den Steuerapparat 64 mitteilt, daß das Raupenfahrzeug sich in Rückwärtsfahrt befindet. Dann steuert der Steuerapparat die Elektromotoren in entgegengesetzter Richtung an, so daß diese sich bei 102 % der Geschwindigkeit der Hauptantreibräder drehen. Da die Hauptantreibräder ebenfalls mit Freilaufkupplungen versehen sind, arbeitet das Raupenfahrzeug auf die gleiche Weise, wie sie bereits im Zusammenhang mit der Beschreibung der ersten Ausgestaltung beschrieben wurde.

Mit dem oben beschriebenen elektrischen Antriebssystem werden die Zusatztreibräder ständig so lange angetrieben, wie das System angesteuert wird. Eine mögliche Modifikation des Systems ist darin zu sehen, daß ein linker und rechter Laufbahngeschwindigkeitssensor 70 und 72 vorgesehen sind, welche an den Steuerapparat 64 Signale über die Geschwindigkeit der Laufbahnen liefern. Bei dieser Modifikation werden die Elektromotoren nur dann angesteuert, wenn ein tatsächlicher Schlupf zwischen dem Haupttreibrad und der Riemenlaufbahn festgestellt wird. Hierbei vergleicht der Steuerapparat die Geschwindigkeit der Haupttreibräder mit der Geschwindigkeit der Riemenlaufbahn. Wenn die Riemenlaufbahngeschwindigkeit um einen bestimmten Prozentsatz unter der Geschwindigkeit der Haupttreibräder liegt, werden die Elektromotoren eingeschaltet.

Bei dieser Modifikation brauchen die Elektromotoren nicht mit einem konstanten Geschwindigkeitsverhältnis bezüglich der Haupttreibräder angetrieben zu werden, vielmehr kann der Steuerapparat ein variables Geschwindigkeitsprofil für den Antrieb der zusätzlichen Treibräder liefern. Beispielsweise kann die Geschwindigkeit der Elektromotoren zunächst so gesteuert werden, daß diese bei 98 % der Haupttreibradgeschwindigkeit angetrieben werden, jedoch nach einer gewissen Zeit die Geschwindigkeit auf 99 % der Geschwindigkeit der Haupttreibräder angehoben wird.

Mit dem elektrischen Steuersystem können zusätzliche Radgeschwindigkeitssensoren verwendet werden, mit denen ein Rückkopplungskreis aufgebaut werden kann, um die Motordrehzahl durch den Steuerapparat einzustellen. Außerdem kann das zusätzliche Lenksystem entfallen, da die Elektromotoren individuell durch den Steuerapparat 64 antreibbar sind.

Bei den zuerst beschriebenen Ausgestaltungen der Erfindung handelt es sich um mechanische Zusatzantriebssysteme, während es sich bei der dritten Ausgestaltung um ein elektrisches Antriebssystem handelt. Bei allen drei Ausgestaltungen werden die vorderen zusätzlichen Treibräder bei einer Geschwindigkeit angetrieben, die geringer ist als die Geschwindigkeit der hinteren Haupttreibräder, sofern das Raupenfahrzeug sich in Vorwärtsrichtung bewegt. Die vorderen Zusatztreibräder werden schneller angetrieben als die hinteren Haupttreibräder, wenn das Raupenfahrzeug zurückfährt. Hierbei ergibt sich ein gutes Zugspannungsprofil bei einer maximalen Spannung des unteren Teils des Riemens.

**Patentansprüche**

1. Raupenfahrzeug mit Antrieb (17) und Hauptgetriebe (29), welche wenigstens eine als Endlosriemen ausgebildete Gleisbahn (20) mit Hilfe wenigstens eines mit der Gleisbahn (20) in reibendem Eingriff stehenden Haupttreibrades (22) bei einer ersten Geschwindigkeit antreiben, und mit wenigstens einem Zusatztreibrad (24), welches ebenfalls antreibbar ist und mit der Gleisbahn (20) in reibendem Eingriff steht, dadurch gekennzeichnet, daß das Zusatztreibrad (24) mit einer von der Haupttreibradgeschwindigkeit abweichenden zweiten Geschwindigkeit von einem Zusatzgetriebe (48) antreibbar ist, welches einen Getriebeeingang, der mit dem Hauptgetriebe (29) in Verbindung steht, und einen Getriebeausgang, welcher mit dem Zusatztreibrad (24) in Verbindung steht, aufweist.

2. Raupenfahrzeug nach Anspruch 1, dadurch gekennzeichnet, daß alle Zusatztreibräder (24) über ein gemeinsames Zusatzgetriebe (48) mit dem Hauptgetriebe (29) in Verbindung stehen.

3. Raupenfahrzeug nach Anspruch 1 oder 2, dadurch gekennzeichnet, daß dem Zusatzgetriebe (48) ein Zusatzlenksystem (46) nachgeschaltet ist.

4. Raupenfahrzeug nach Anspruch 1, dadurch gekennzeichnet, daß jedem Zusatztreibrad (24) ein Zwischengetriebe in Form einer Endantriebseinheit (50, 52) vorgeschaltet ist.

5. Raupenfahrzeug nach Anspruch 4, dadurch gekennzeichnet, daß die Endantriebseinheit (50, 52) einem Lenksystem (28) der Haupttreibräder (22) nachgeschaltet ist und über dieses mit dem Hauptgetriebe (29) in Verbindung steht.

6. Raupenfahrzeug mit Antrieb (17) und Hauptgetriebe (29), welche wenigstens eine als Endlosriemen ausgebildete Gleisbahn (20) mit Hilfe wenigstens eines mit der Gleisbahn (20) in reibendem Eingriff stehenden Haupttreibrades (22) bei einer ersten Geschwindigkeit antreiben, und mit wenigstens einem Zusatztreibrad (24), welches ebenfalls antreibbar ist und mit der Gleisbahn (20) in reibendem Eingriff steht, dadurch gekennzeichnet, daß das Zusatztreibrad (24) mit einer von der Haupttreibradgeschwindigkeit abweichenden zweiten Geschwindigkeit von einem Elektromotor (60, 62) antreibbar ist.

7. Raupenfahrzeug nach Anspruch 6, dadurch gekennzeichnet, daß jedes Zusatztreibrad (24) durch einen gesonderten Elektromotor (60, 62) antreibbar ist.

8. Raupenfahrzeug nach einem der Ansprüche 1 bis 7, dadurch gekennzeichnet, daß zwischen Hauptgetriebe (29) und zwei Haupttreibrädern (22) ein Lenksystem (28) zwischengeschaltet ist.

9. Raupenfahrzeug nach einem der Ansprüche 1 bis 8, dadurch gekennzeichnet, daß dem wenigstens einen Haupttreibrad (22) eine Hauptfreilaufkupplung (38) und/oder dem wenigstens einen Zusatztreibrad (24) eine Zusatzfreilaufkupplung (40) vorgeschaltet ist.

10. Raupenfahrzeug nach Anspruch 9, dadurch gekennzeichnet, daß die Hauptfreilaufkupplung (38) derart ausgebildet ist, daß sie sperrt, wenn die Gleisbahn (20) in eine erste Richtung angetrieben wird, und ein Überholen erlaubt, wenn die Gleisbahn (20) in eine zweite entgegengesetzte Richtung angetrieben wird, und/oder daß die Zusatzfreilaufkupplung (40) derart ausgebildet ist, daß sie sperrt, wenn die Gleisbahn (20) in die zweite Richtung angetrieben wird, und ein Überholen erlaubt, wenn die Gleisbahn (20) in die erste Richtung angetrieben wird.

11. Raupenfahrzeug nach Anspruch 10, dadurch gekennzeichnet, daß ein Richtungssensor (98) zur Erfassung der Fahrtrichtung des Raupenfahrzeuges (10) vorgesehen ist, der in Abhängigkeit der erfaßten Fahrzeugrichtung Steuersignale an die Freilaufkupplungen (38, 40) und/oder die Elektromotoren (60, 62) abgibt.

7

**12.** Raupenfahrzeug nach einem der Ansprüche 1 bis 5 und 8 bis 11, dadurch gekennzeichnet, daß das Zusatzgetriebe (48) bzw. die Endantriebseinheit (50, 52) zwei Getriebestufen aufweist.

**13.** Raupenfahrzeug nach Anspruch 12, dadurch gekennzeichnet, daß der Richtungssensor (98) zur Erfassung der Fahrtrichtung des Raupenfahrzeuges (10) in Abhängigkeit der erfaßten Fahrgeschwindigkeit Steuersignale zur Umschaltung des Zusatzgetriebes (48) oder der Endantriebseinheit (50, 52) abgibt.

**14.** Raupenfahrzeug nach einem der Ansprüche 6 bis 11, dadurch gekennzeichnet, daß ein Sensor (66, 68) zur Erfassung der ersten Drehzahl des Haupttreibrades (22) vorgesehen ist, der durch elektrische Signale den Elektromotor (60, 62) so ansteuert, daß dieser das wenigstens eine Zusatztreibrad (24) bei einer zweiten Drehzahl antreibt.

**15.** Raupenfahrzeug nach Anspruch 14 dadurch gekennzeichnet, daß ein Sensor (70, 72) zur Erfassung der Gleisbahngeschwindigkeit vorgesehen ist, dessen Signale einem Steuerapparat (64) zugeführt werden, und daß der Steuerapparat (64) die Drehgeschwindigkeit des Haupttreibrades (22) mit der Gleisbahngeschwindigkeit vergleicht und bei Schlupf zwischen dem Haupttreibrad (22) und der Gleisbahn (20) wenigstens einen Elektromotor (60, 62) ansteuert, um wenigstens ein Zusatztreibrad (24) anzutreiben.

**Claims**

**1.** Track-laying vehicle with a drive unit (17) and a main gearbox (29), which drive at least one track (20) in the form of an endless belt at a first speed with the aid of at least one main driving wheel (22) in frictional engagement with the track (20), and with at least one auxiliary driving wheel (24), which can likewise be driven and is in frictional engagement with the track (20), characterized in that the auxiliary driving wheel (24) can be driven through an auxiliary gearbox (48) at a second speed different from the main driving wheel speed, the auxiliary gearbox having a gearbox input connected to the main gearbox (29) and a gearbox output connected to the auxiliary driving wheel (24).

**2.** Track-laying vehicle according to claim 1, characterized in that all auxiliary driving wheels (24) are coupled to the main gearbox (29) through a common auxiliary gearbox (48).

**3.** Track-laying vehicle according to claim 1 or 2, characterized in that an auxiliary steering system (46) is connected downstream of the auxiliary gearbox (48).

**4.** Track-laying vehicle according to claim 1, characterized in that an intermediate gearbox in the form of a final drive unit (50, 52) is connected before each auxiliary driving wheel (24).

**5.** Track-laying vehicle according to claim 4, characterized in that the final drive unit (50, 52) is connected downstream of a steering system (28) of the main driving wheels (22) and is coupled therethrough to the main gearbox (29).

**6.** Track-laying vehicle with a drive unit (17) and a main gearbox (29), which drive at least one track (20) In the form of an endless belt at a first speed with the aid of at least one main driving wheel (22) in frictional engagement with the track (20), and with at least one auxiliary driving wheel (24), which can likewise be driven and is In frictional engagement with the track (20), characterized in that the auxiliary driving wheel (24) can be driven through an electric motor (60, 62) at a second speed different from the main driving wheel speed.

**7.** Track-laying vehicle according to claim 6, characterized in that each auxiliary driving wheel (24) is drivable by a separate electric motor (60, 62).

**8.** Track-laying vehicle according to any one of claims 1 to 7, characterized in that a steering system (28) Is coupled between the main gearbox (29) and two main driving wheels (22).

**9.** Track-laying vehicle according to any one of claims 1 to 8, characterized in that a main over-running clutch (38) is connected upstream of at least one main driving wheel (22) and/or an auxiliary over-running clutch (40) is connected upstream of at least one auxiliary driving wheel (24).

10. Track-laying vehicle according to claim 9, characterized in that the main over-running clutch (38) Is so formed that it locks when the track (20) is driven in a first direction and allows over-running when the track (20) is driven in a second, opposite direction, and/or the auxiliary over-running clutch (40) is so formed that it locks when the track (20) is driven in the second direction and allows over-running when the track (20) is driven in the first direction.

11. Track-laying vehicle according to claim 10, characterized in that a direction sensor (98) is provided to sense the direction of travel of the track-laying vehicle (10) and which provides control signals to the over-running clutches (38, 40) and/or the electric motors (60, 62) in dependence on the sensed direction of travel.

12. Track-laying vehicle according to any one of claims 1 to 5 and 8 to 11, characterized in that the auxiliary gearbox (48) or the final drive unit (50, 52) has two gear stages.

13. Track-laying vehicle according to claim 12, characterized In that the direction sensor (98) for sensing the direction of travel of the track-laying vehicle (10) provides control signals for shifting the auxiliary gearbox (48) or the final drive unit (50, 52).

14. Track-laying vehicle according to any one of claims 6 to 11, characterized in that a sensor (66, 68) is provided for sensing the first speed of rotation of the main driving wheel (22) and which so controls the electric motor (60, 62) by electric signals that the motor drives the at least one auxiliary driving wheel (24) at a second speed of rotation.

15. Track-laying vehicle according to claim 14, characterized in that a sensor (70, 72) is provided for sensing the track speed, its signals being applied to a control device (64), an In that the control device (64) compares the speed of rotation of the main driving wheel (22) with the track speed and controls at least one electric motor (60, 62) when there is slip between the main driving wheel (22) and the track (20), in order to drive at least one auxiliary driving wheel (24).

**Revendications**

1. Véhicule chenillé, avec un moyen d'entraînement (17) et une transmission principale (29) qui entraînent à une première vitesse au moins une bande de roulement (20), réalisée sous forme de courroie sans fin, à l'aide d'au moins une roue motrice principale (22) qui se trouve en engagement de friction avec la bande de roulement (20), et avec au moins une roue motrice auxiliaire (24), qui peut elle aussi être entraînée et est en engagement de friction avec la bande de roulement (20), **caractérisé** en ce que la roue motrice auxiliaire (24) peut être entraînée à une seconde vitesse, différente de la vitesse de la roue motrice principale, par une transmission auxiliaire (48 ) qui présente une entrée de transmission, qui est reliée à la transmission principale (29), et une sortie de transmission, qui est reliée à la roue motrice auxiliaire ( 24 ).

2. Véhicule chenillé selon la revendication 1, caractérisé en ce que toutes les roues motrices auxiliaires (24) sont reliées à la transmission principale (29) par l'intermédiaire d'une transmission auxiliaire (48) commune.

3. Véhicule chenillé selon la revendication 1 ou 2, caractérisé en ce qu'un système de direction auxiliaire (46) est monté à la suite de la transmission auxiliaire (48 ).

4. Véhicule chenillé selon la revendication 1, caractérisé en ce qu'une transmission intermédiaire, sous la forme d'une unité de transmission finale (50, 52), est montée avant chaque roue motrice auxiliaire (24).

5. Véhicule chenillé selon la revendication 4, caractérisé en ce que l'unité de transmission finale (50, 52) est montée à la suite d'un système de direction (28) des roue motrices principales (22) et est reliée à la transmission principale (29) par l'intermédiaire de ce système.

6. Véhicule chenillé, avec un moyen d'entraînement (17) et une transmission principale (29) qui entraînent à une première vitesse au moins une bande de roulement (20), réalisée sous forme de courroie sans fin, à l'aide d'au moins une roue motrice principale (22) qui se trouve en engagement de friction avec la bande de roulement (20), et avec au moins une roue motrice auxiliaire (24), qui peut elle aussi être entraînée et est en engagement de friction avec la bande de roulement (20), **caractérisé** en ce que la roue motrice auxiliaire (24) peut être entraînée à une seconde vitesse, différente de la vitesse de la roue motrice principale, par un moteur électrique (60, 62).

7. Véhicule chenillé selon la revendication 6, caractérisé en ce que chaque roue motrice auxiliaire (24) peut être entraînée par un moteur électrique (60, 62) distinct.

8. Véhicule chenillé selon l'une des revendications 1 à 7, caractérisé en ce qu'un système de direction (28) est monté entre la transmission principale (29) et deux roues motrices principales (22).

9. Véhicule chenillé selon l'une des revendications 1 à 8, caractérisé en ce qu'un embrayage principal à roue libre (38) est monté avant la ou les roues motrices principales (22) et/ou un embrayage auxiliaire à roue libre (40) est monté avant la ou les roues motrices auxiliaires (24).

10. Véhicule chenillé selon la revendication 9, caractérisé en ce que l'embrayage principal à roue libre (38) est conçu de telle sorte qu'il assure un verrouillage lorsque la bande de roulement (20) est entraînée dans une première direction et permet un rattrapage lorsque la bande de roulement (20) est entraînée dans une seconde direction, opposée à la première, et/ou en ce que l'embrayage auxiliaire à roue libre (40) est conçu de telle sorte qu'il assure un verrouillage lorsque la bande de roulement (20) est entraînée dans la seconde direction et permet un rattrapage lorsque la bande de roulement (20) est entraînée dans la première direction.

11. Véhicule chenillé selon la revendication 10, caractérisé en ce qu'un capteur de direction (98) est prévu pour enregistrer la direction de marche du véhicule chenillé (10) et délivre, en fonction de la direction de marche enregistrée, des signaux de commande aux embrayages à roue libre (38, 40) et/ou aux moteurs électriques (60, 62).

12. Véhicule chenillé selon l'une des revendications 1 à 5 et 8 à 11, caractérisé en ce que la transmission auxiliaire (48) ou encore l'unité de transmission finale (50, 52) présente deux étages de transmission.

13. Véhicule chenillé selon la revendication 12, caractérisé en ce que le capteur de direction (98) prévu pour enregistrer la direction de marche du véhicule chenillé (10) délivre, en fonction de la direction de marche enregistrée, des signaux de commande pour commuter la transmission auxiliaire (48) ou l'unité de transmission finale (50, 52).

14. Véhicule chenillé selon l'une des revendications 6 à 11, caractérisé en ce qu'un capteur (66, 68) est prévu pour enregistrer la première vitesse de rotation de la roue motrice principale (22) et asservit par des signaux électriques le moteur électrique (60, 62) de telle sorte que ce dernier entraîne la ou les roues motrices auxiliaires (24) à une seconde vitesse de rotation.

15. Véhicule chenillé selon la revendication 14, caractérisé en ce qu'un capteur (70, 72) est prévu pour enregistrer la vitesse de la bande de roulement et ses signaux sont transmis à un appareil de commande (64), et en ce que l'appareil de commande (64) compare la vitesse de rotation de la roue motrice principale (22) avec la vitesse de la bande de roulement et, en cas de patinage entre la roue motrice principale (22) et la bande de roulement (20), asservit au moins un moteur électrique (60, 62) pour entraîner au moins une roue motrice auxiliaire (24).

FIG. 1

FIG. 2

100 %                    98 %

100 %

100 %

FIG. 3a

100 %                    102 %

102 %

102 %

102 %

FIG. 3b

100 %                    98 %

98 %

100 %

98 %

FIG. 3c

100 %                    102 %

100 %

100 %

100 %

FIG. 3d

FIG. 4

FIG. 5